# EUROPEAN PATENT APPLICATION

(11) **EP 2 090 878 A2**
(43) Date of publication of application: **19.08.2009**
(21) Application number: 09380023.3
(22) Date of filing: 11.02.2009
(51) Int. Cl.: G01N 15/02

(54) **System for reducing pressure drop in an electric mobility analyser (DMA)**

(30) Priority: 14.02.2008 ES 200800403
(71) Applicant: Centro de Investigaciones Energéticas, Medioambientales y Tecnológicas, 28040 Madrid (ES)
(72) Inventor: Martin Espigares, Manuel, 28040 Madrid (ES); Gomez Moreno, Francisco Javier, 28040 Madrid (ES); Martinez-Lozano Sinues, Pablo, 28040 Madrid (ES)
(74) Representative: Garcia-Cabrerizo y del Santo, Pedro Maria

(57) **Abstract**

System for reducing pressure drop in an electric mobility analyser (DMA), of the so-called Vienna type, which is built in such a manner as to favour flow asymmetry, does not have restrictions thereto to avoid high pressure drops and powerful pumping, is equipped with an electrical insulator, through which dragging gas circulates, and has a cone to stabilise the flow, all in a single device with which it is possible to cover a measurement range of 1 to 600 nm. The electrical insulator used allows voltage differences of up to 14 kV to be reached. The corresponding electrodes, internal and external, are assembled as shown in Figure 1. Applicable to the measurement of ions and particles, within the aforementioned range, with resolutions of up to 12.

## Description

### FIELD OF THE INVENTION

The present invention, which we intend to register under the modality of invention patent, relates to a single device for measuring ions and particles from 1 nm up to 600 nm, with resolutions of up to 12. This wide measurement range is reached on reducing pressure drop in a Vienna-type (Winklmayr, 1991) differential mobility analyser (DMA). Additionally, such range is achieved with a moderate pumping capacity, such as for example by means of an electric vacuum pump. The device of the invention allows voltage differences of up to 14 kV to be reached, with the possibility of measuring particles of several hundred nm.

### BACKGROUND OF THE INVENTION

DMAs classify charged particles based on their capacity to migrate when exposed to an electric field. A DMA basically operates by introducing a sample of charged particles, at a certain point, in a stream of clean gas, which drags them through a zone subject to an electric field. The combination of this field with the fluid field separates the particles based on their respective electric mobilities.

Given that electric mobility depends on the charge and size of the particles, if the distribution of particle charges that enter a DMA is known, its distribution by sizes on flowing out of the DMA can also be determined.

DMAs have traditionally been used by the scientific community to carry out environmental protection-related field studies such as, for example, those relative to obtaining the distribution of atmospheric aerosol particle sizes or emissions produced by combustion processes.

For many years, the measurement range has been between 15 and 1,000 nm. However, developments in nanotechnology and other high-resolution analytical techniques have required the extension of this range from 1 nm onwards, for the purpose of separating particles of very similar sizes in a highly efficient manner.

By way of example, the properties of so-called functional materials, or nanomaterials, largely depend on the size of the Particles used in the synthesis of the corresponding material; i.e. the particles must be highly monodisperse (of the same size to a high degree). Hence the relevance of having instrumentation that fulfils very strict resolution requirements.

On the assumption that the particles being measured are non-diffusive, the ideal resolution of the instrument is the result of the relationship between dragging gas flow and aerosol flow (Knutson and Whitby, 1975). However, the limit to reaching a high resolution within the nanometric range is that of Brownian diffusion.

A strategy to minimise the diffusive effect is to increase the Peclet number or, in other words, increase the Reynolds number (De Juan, 1998). However, in addition to operating at high flow levels, the flow regime must remain laminar. In the event of a transition to turbulence, the resolution of the instrument is dramatically degraded. Another condition that must be fulfilled by the flow is that of being axiasymmetrical.

In Winklmayr's original design the gas is extracted radially. For this reason, and in order to maintain the axiasymmetry of the flow, a constriction is applied downstream of the aerosol's outflow slot. The price is a high pressure drop that prevents reaching high flows and, therefore, high resolutions.

An attempt to solve this problem was made by Rosser and Fernández de la Mora (2005), in addition to the prior prototype by Martinez Lozano (2004), the approaches of which envisage two outflow chambers to avoid the asymmetry caused by conventional DMA outflow. On duplicating the chambers, a constriction similar to that of the traditional ones is required, which increases the pressure drop in dragging gas outflow.

These problems have caused the need to use two different DMAs to cover the range of 1 to 600 nm, as a single instrument was not capable of covering it with the minimum adequate resolution.

According to the system proposed in the present invention, dragging gas outflow is produced without constriction in a single chamber, with a completely axial dragging gas extraction, which allows for a relatively low pressure drop, thereby reaching high Reynolds numbers. This pressure drop is minimised without using diffusers, the walls being always parallel, without a divergence angle. As a consequence of all this, a single device has been obtained that is capable of measuring within the range of 1 to 600 nm, with resolutions higher than 10 and maintaining the inflow/outflow distance of the aerosol from Winklmayr's DMA. The fact that its manufacture and assembly are easy must also be highlighted.

### BRIEF DESCRIPTION OF THE INVENTION

The DMA consists of a high-efficiency filter, which allows the dragging gas to enter free of particles and uniformly distributed. After the dragging gas passes through a lamination grid and converging section, which laminate the flow, it passes through the particle classification section. Downstream of the classification section, the gas is extracted in the axial direction, after passing through a grooved Teflon^{®} part, which allows a single outflow chamber, and which simultaneously acts as support for the internal electrode and as an electrical insulator. Downstream, the gas is finally extracted through another converging Teflon^{®} part and a metallic cone-shaped part, the object of which is to avoid, as far as possible, flow volatilities, which could propagate upstream, towards the classification section, and deteriorate the resolution.

The dragging gas outflow system, comprised of these three parts, allows resolutions of up to 12 to be reached, with ions of approximately 1 nm. The maximum voltage difference reached, before reaching dielectric break, is 14 kV which, together with the distance between the aerosol inflow and outflow slots, allows the measurement of particles of up to 600 nm, with a 3:0.3 dragging gas-to-aerosol ratio, and a theoretical resolution of 10.

### DESCRIPTION OF DRAWINGS

In order to complement the description and for the purpose of better understanding the invention, several representative figures of graphic aspects thereof have been included, in which the following are illustrated:
- Fig. 1: shows a side view of the DMA assembly of the invention;
- Fig. 2: shows a detailed side view of the dragging gas extraction assembly, where we can observe a single chamber and the absence of constrictors;
- Figs. 3 to 6: show different constituent parts of the system of Figure 2;

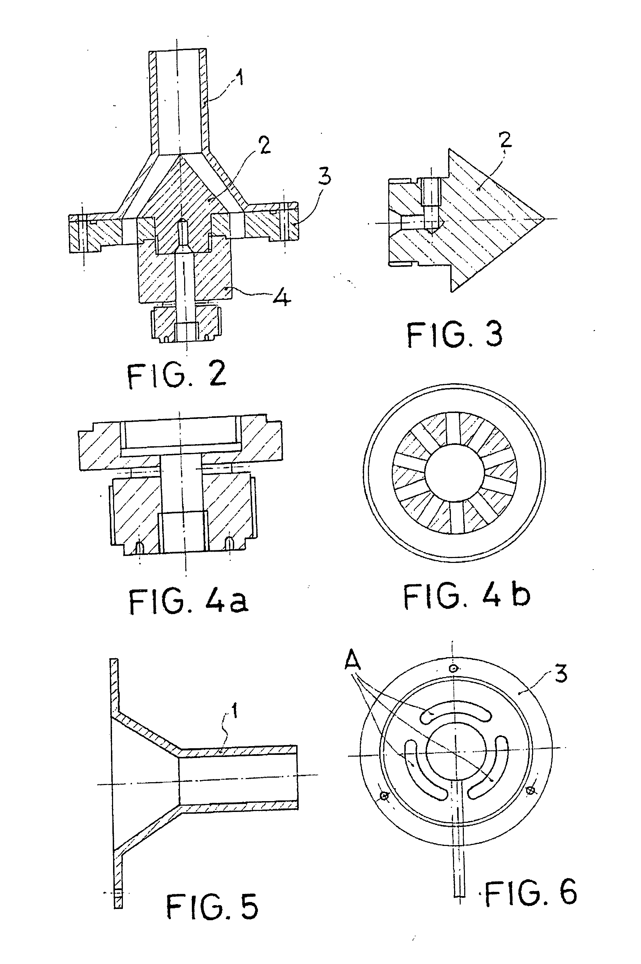

- Fig. 3: shows the cone, disposed downstream, designed to stabilise the flow on passage of air through part 3 (Fig. 6);
- Figs. 4a and 4b: show a side and top plan section view of the part disposed downstream of part 6 (Fig. 3), through which the monodisperse aerosol is extracted;
- Fig. 5: shows part 1, which is connected to the dragging gas extraction pump and allows its axial extraction;
- Fig. 6: shows a top plan view of the part that electrically insulates the internal and external electrode, in addition to supporting it;

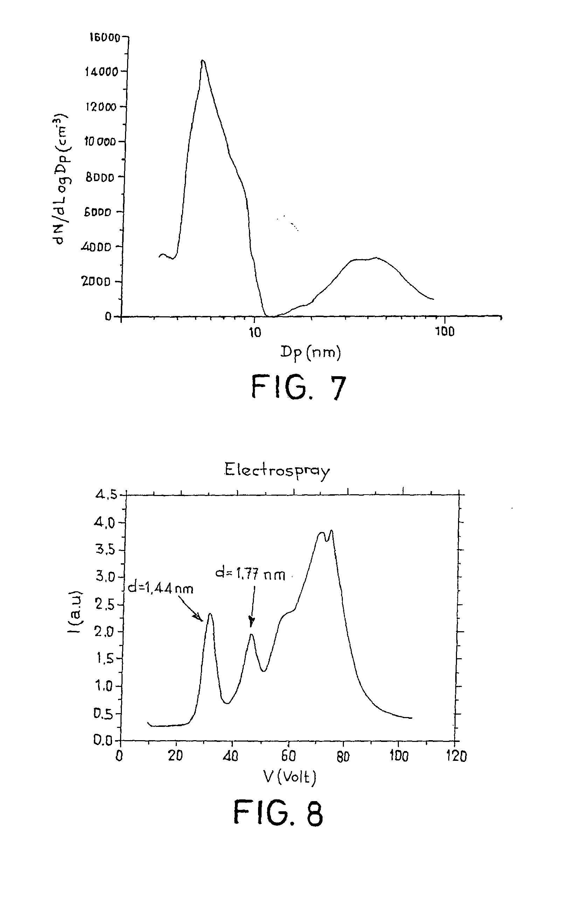

- Fig. 7: represents a distribution of atmospheric aerosol sizes; and
- Fig. 8: shows a mobility spectrum of ions of known size.

### DETAILED DESCRIPTION OF A PREFERRED EMBODIMENT

The dragging gas extraction system (Fig. 2) consists of a circular Teflon^{®} part (3), having three concentric grooved orifices (A, in Fig. 6). The dragging gas circulates axially through the three slots. There is a fourth radially drilled orifice through which the monodisperse aerosol outflow tube is introduced. This tube would be threaded onto the metallic conical part (2), disposed downstream of the part (3). In turn, the so-called bullet holder (4) is threaded onto the conical part, whereby the Teflon^{®} disk (3) is disposed between the conical part (2) and the bullet holder (4).. The internal electrode is threaded onto the bullet holder (4). Once these parts are assembled, they are disposed on the external electrode (6). Finally, the Teflon^{®} part (1) is screwed onto the assembly.

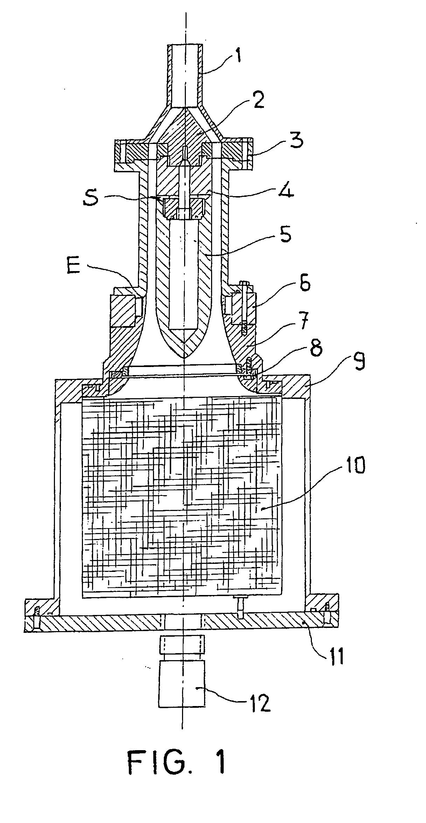

In this manner, the dragging gas passes through the inflow tube (12), until it reaches the chamber comprised of the parts (9) and (11). The gas enters radially through a HEPA filter (10). Next, it passes through a lamination grid tensed by the part (8). It is accelerated in the converging section (7) and is mixed with the polydisperse aerosol in the position (E) of Figure 1. The particles are separated based on their electric mobility, and only those within a narrow mobility range are extracted through the slot (S) of Figure 1. The dragging gas continues downstream crossing the part (3) and is finally extracted through the part (1).

### INDUSTRIAL APPLICATION

The instrument of the invention may be used in the field of aerosol technology for measuring the distribution of polydisperse aerosol particle sizes (for example, in atmospheric aerosols or aerosols resulting from combustion processes). In order to illustrate this point, in Figure 7 a distribution of atmospheric aerosol sizes obtained through the instrument of the invention is represented. Two peaks can be observed: one sub-micrometric and the other nanometric. Up to the present invention, two DMAs were required, with different ranges, in order to simultaneously measure the two maximums.

Similarly, it can be used for the generation of monodisperse particles. This technique is used in the manufacture of functional materials based on nanomaterial synthesis, in the gaseous phase. Its resolution allows the separation of particles that are similar in size resulting from complex mixtures. In Figure 8 a mobility spectrum of ions of known size can be observed. Here we can see its capacity to almost completely separate ions of 1.44 and 1.77 nm.

## Claims

1. System for reducing pressure drop in an electric mobility analyser (DMA), of the so-called Vienna type, **characterised in that** it favours flow axiassymetry while not having restrictions thereof, thereby producing a low pressure drop, in such a manner that it allows high flows with moderate pumping capacity to be reached.

2. System for reducing pressure drop in an electric mobility analyser (DMA), according to claim 1, **characterised in that** it consists of an electric insulator through which the dragging gas circulates in an axial direction, a cone disposed downstream to stabilise the flow, a part disposed upstream which supports the internal electrode and a tube joined to the cone through which the monodisperse aerosol is extracted.

3. System for reducing pressure drop in an electric mobility analyser (DMA), according to claims 1 and 2, **characterised in that** it incorporates an electric insulator that allows a voltage difference of up to 14 kV to be reached.

4. System for reducing pressure drop in an electric mobility analyser (DMA), according to claims 1, 2 and 3, **characterised in that** it is comprised of a single device with which it is possible to cover a measurement range from 1 to 600 nm, reaching resolutions of approximately 12 for the lower range and at high operating flows.
